# EUROPEAN PATENT APPLICATION

(11) **EP 3 812 178 A1**
(43) Date of publication of application: **28.04.2021**
(21) Application number: 19821998.2
(22) Date of filing: 22.05.2019
(51) Int. Cl.: B60C 15/00, B60C 13/00

(54) **TIRE FOR CONSTRUCTION VEHICLES**

(30) Priority: 21.06.2018 JP 2018117764
(71) Applicant: Bridgestone Corporation, Chuo-Ku Tokyo 104-8340 (JP)
(72) Inventor: KAWAKAMI, Yuki, Tokyo 104-8340 (JP)
(74) Representative: Oxley, Robin John George
(86) International application number: PCT/JP2019/020241
(87) International publication number: WO 2019/244547

(57) **Abstract**

At least one of a tire side portion (30) or a bead portion (60) of a construction vehicle tire (10), a recessed surface (70) recessed toward the inside of the tire is formed. The recessed surface (70) is formed outside in the tire radial direction from an outside end in the tire radial direction of a rim wheel (200) assembled to the construction vehicle tire (10), and a groove portion (100) extending in the tire radial direction is formed on the recessed surface (70). A plurality of a groove portion (100) are formed at intervals in the tire circumferential direction.

## Description

### [Technical Field]

The present invention relates to a construction vehicle tire capable of suppressing temperature rise of a bead portion.

### [Background Art]

Conventionally, a vehicle (construction vehicle) such as a dump truck traveling on a mining site travels on uneven ground under a high load, so that a temperature rise of a pneumatic tire (Hereinafter, construction vehicle tire) mounted on the vehicle is severe.

In view of this, there is known a tire for a construction vehicle in which a recessed surface recessed inward of the tire is formed in a tire side portion (Sidewall) near a bead portion (See Patent Literature 1.). In the construction vehicle tire having such a structure, the rubber gauge of the portion becomes small, so that heat generation can be suppressed.

### [Citation List]

### [Patent Literature]

[PTL 1] Japanese Unexamined Patent Application Publication No. 2014 -162299

### [Summary of Invention]

In recent years, the construction vehicle as described above has realized an increase in operation speed and an increase in loading capacity with further improvement in performance. Accordingly, construction vehicle tires are used in more severe environments.

Therefore, there is a need for a method for more effectively suppressing the temperature rise of the bead portion, which is one of the portions where the temperature rise is particularly intense. On the other hand, simply deepening the recessed surface as described above may increase the amount of deformation (strain) of the portion where the recessed surface is formed at the time of loading, and may decrease durability.

Accordingly, an object of the present invention is to provide a construction vehicle tire capable of more effectively suppressing the temperature rise of a bead portion while forming a recessed surface recessed toward the inside of the tire on the tire side portion or the bead portion.

One aspect of the present invention is a construction vehicle tire (Construction vehicle tire 10) including a tread portion (tread portion 20) in contact with a road surface, a tire side portion (Tire side portion 30) which is continuous with the tread portion and located inside the tread portion in the tire radial direction, a bead portion (Bead portion 60) which is connected to the tire side portion and positioned inside the tire side portion in the tire radial direction. At least one of the tire side portion and the bead portion is formed with a recessed surface (Recessed surface 70) recessed toward the inside of the tire, a recessed surface is formed outside in the tire radial direction from an outside end in the tire radial direction of a rim wheel (Rim wheel 200) assembled to the construction vehicle tire, a groove portion (Groove portion 100) extending in the tire radial direction is formed on the recessed surface, and a plurality of the groove portion are formed at intervals in the tire circumferential direction.

### [Brief Description of Drawings]

[FIG. 1] FIG. 1 is a partial perspective view of a construction vehicle tire 10.
[FIG. 2] FIG. 2 is a partial cross-sectional view of the construction vehicle tire 10 along the tire width direction and the tire radial direction.
[FIG. 3] FIG. 3 is a partially enlarged cross-sectional view of the construction vehicle tire 10 including a bead portion 60 along the tire width direction and tire radial direction.
[FIG. 4] FIG. 4 is a partially enlarged side view of the construction vehicle tire 10 including the bead portion 60.
[FIG. 5] FIG. 5 is an illustration of a falling angle of a carcass 40.
[FIG. 6] FIG. 6 is a graph showing the relationship between the falling angle of the carcass 40 and the area of the groove portion 100 formed in the recessed surface 70.

### [Description of Embodiments]

Hereinafter, an embodiment will be described based on the drawings. It should be noted that the same or similar reference numerals are given to the same functions and structures, and the description thereof will be omitted as appropriate.

### (1)Overall schematic configuration of tire for construction vehicle

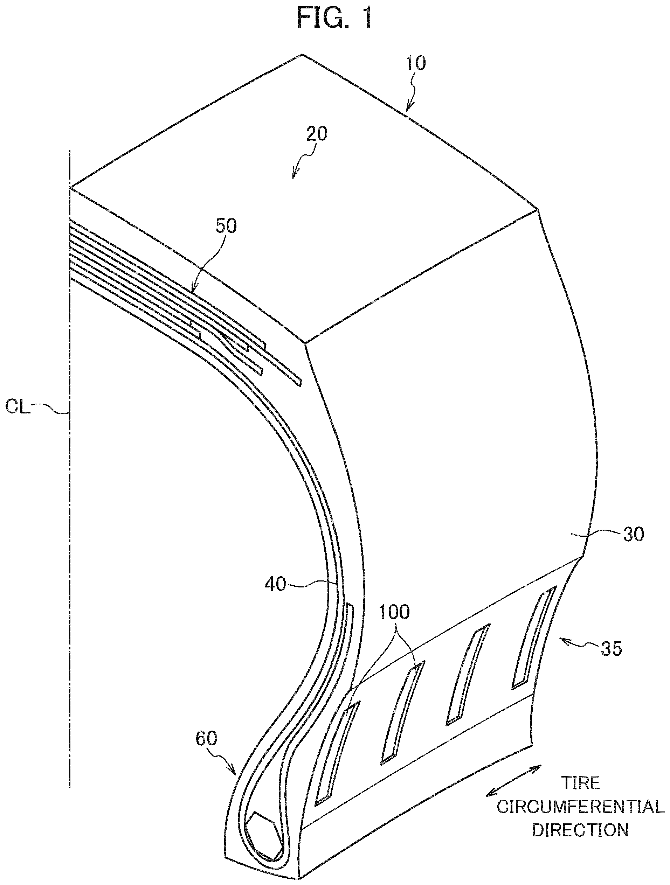

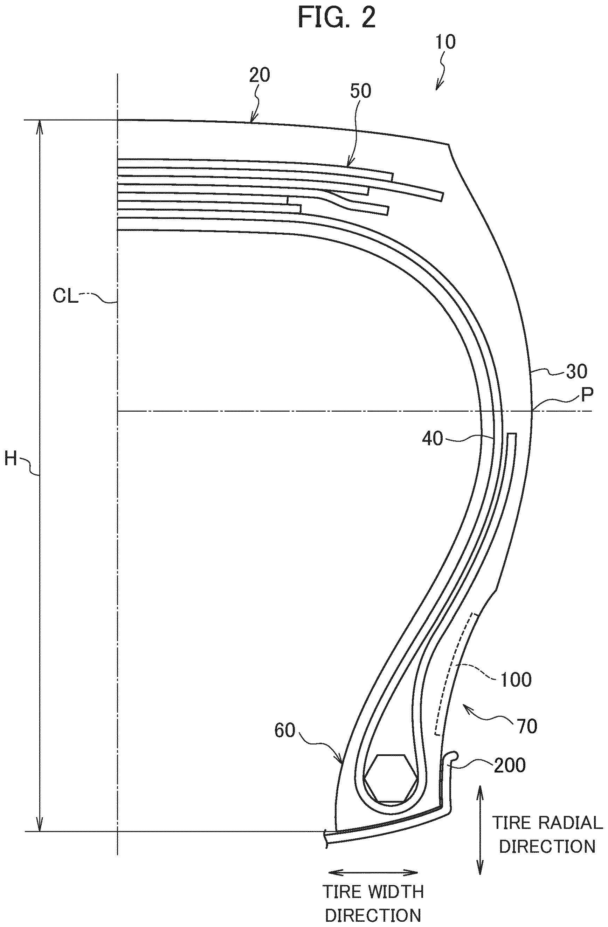

FIG. 1 is a partial perspective view of a construction vehicle tire 10 according to the present embodiment. FIG. 2 is a partial cross-sectional view of the construction vehicle tire 10 along the tire width direction and the tire radial direction.

As shown in FIGS. 1 and 2, the construction vehicle tire 10 has a tread portion 20 and a tire side portion 30. In FIGS. 1 and 2, only one side in the tire width direction is shown with a tire equator line CL as a reference, but the other side in the tire width direction with the tire equator line CL as a reference has the same shape (symmetrical geometry).

The construction vehicle tire 10 is preferably used for a construction vehicle such as a dump truck, an articulated dump truck, a wheel loader and the like traveling in a stone crushing, a mine or a dam site. The construction vehicle tire 10 assembled to a rim wheel 200 is filled with air or a gas other than air (For example, nitrogen gas).

In this embodiment, the size of the construction vehicle tire 10 is 59/80 R 63. However, the construction vehicle tire 10 is not limited to such a size, and the diameter size may be larger than 29 inches.

The tread portion 20 is a portion in contact with a road surface. In the tread portion 20, a pattern (not shown) corresponding to the use environment of the construction vehicle tire 10 and the type of the construction vehicle to be mounted is actually formed.

The tire side portion 30 continues to the tread portion 20 and is positioned on the inner side in the tire radial direction than the tread portion 20. Specifically, the tire side portion 30 is an area from the outer end in the tire width direction of the tread portion 20 to the upper end of the bead portion 60. The tire side portion 30 is sometimes called a side wall or the like.

A carcass 40 forms the skeleton of the construction vehicle tire 10. The carcass 40 has a radial structure having carcass cords (not shown) radially arranged along the tire radial direction. However, the present invention is not limited to the radial structure, and may be a bias structure in which the carcass cord is arranged so as to cross in the tire radial direction.

A belt layer 50 is provided on the inner side in the tire radial direction of the tread portion 20. The belt layer 50 is composed of a plurality of (For example, 4 to 6) belts containing cords.

The bead portion 60 is positioned inside the tire radial direction of the tire side portion 30. The bead portion 60 is annular, and through the bead portion 60, the carcass 40 is folded back from the inside in the tire width direction to the outside in the tire width direction.

In this embodiment, a recessed surface 70 is formed on the tire side portion 30 and the bead portion 60. The recessed surface 70 is recessed toward the inside of the tire. The inner side of the tire means an inner space side formed by the construction vehicle tire 10 assembled to the rim wheel 200 and filled with air or the like. In short, the inner side of the tire may be expressed as the inner side in the tire width direction in this embodiment.

The recessed surface 70, as described in Japanese Unexamined Patent Application Publication No. 2014 -162299, bases on an arc curve along the outer surface (rim side outer surface) of the tire side portion 30 on a cross section of the construction vehicle tire 10 along the tire width direction and the tire radial direction. Specifically, the recessed surface 70 is a tire surface in a region where the circular arc curve is extended to a region where the recessed surface 70 is formed and is recessed inward of the tire from the position of the extended circular arc curve.

The recessed surface 70 is formed outside in the tire radial direction from an outside end in the tire radial direction of a rim wheel 200 assembled to the construction vehicle tire 10. That is, the recessed surface 70 is not formed in a region in contact with the rim wheel 200, specifically, the rim flange portion of the rim wheel 200.

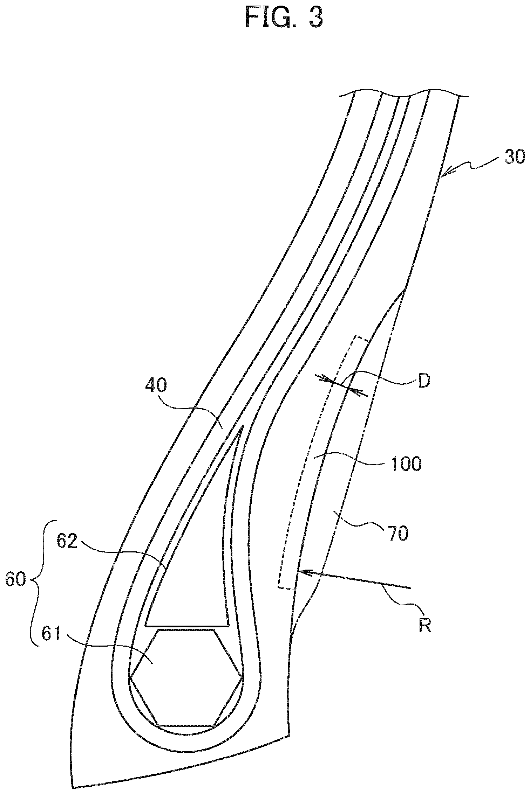

In this embodiment, within a range of 22% or more and 28% or less of the tire height H along the tire radial direction from the tire radial direction inner end of the bead portion 60, 40 mm (maximal part) is recessed from the arc curve (See the dashed line in FIG. 3.) to the tire inner side.

The recessed surface 70 is formed with a plurality of groove portion 100. The groove portion 100 extends in the tire radial direction. In the present embodiment, the groove portion 100 extends in parallel with the tire radial direction (Normal), but if it extends in the tire radial direction, it does not necessarily have to be in parallel with the tire radial direction (Normal).

The plurality of groove portion 100 are formed at intervals in the tire circumferential direction.

### (2)Shape of bead portion 60

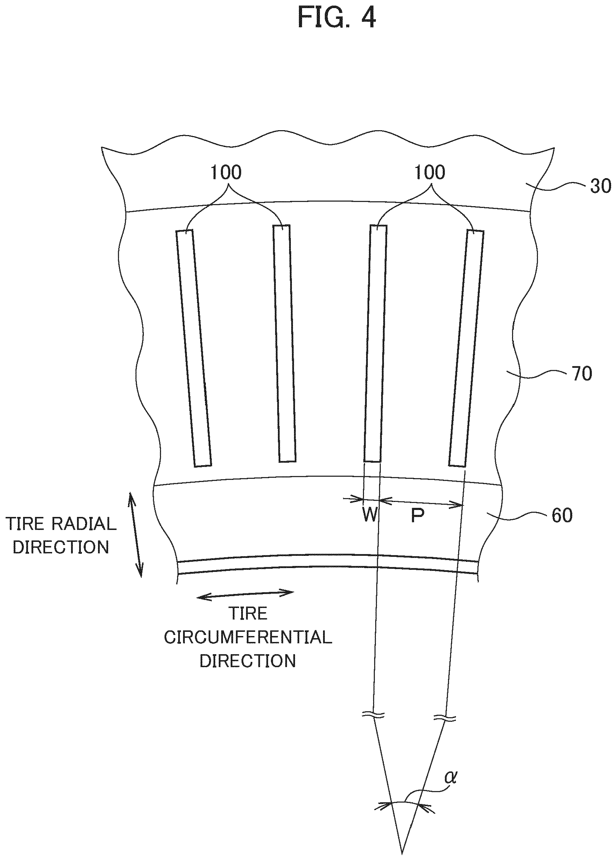

FIG. 3 is a partially enlarged sectional view of the construction vehicle tire 10 including a bead portion 60 along the tire width direction and the tire radial direction. FIG. 4 is a partially enlarged side view of construction vehicle tire 10 including the bead portion 60.

As shown in FIG. 3, the bead portion 60 includes a bead core 61 and a bead filler 62. The bead filler 62 may be referred to as a stiffener.

In the present embodiment, the tire radial inside end of the recessed surface 70 is positioned on the tire radial outside of the tire radial outside end of the bead core 61. The tire radial outside end of the recessed surface 70 is positioned outside in the tire radial direction from the tire radial outside end of the bead filler 62. That is, the tire radial outside end of the recessed surface 70 is positioned at the tire side portion 30.

In the present embodiment, the boundary between the tire side portion 30 and the bead portion 60 is at the outer end of the bead filler 62 in the tire radial direction.

The recessed surface 70 is recessed in an arc shape. In this embodiment, the curvature radius R of the recessed surface 70 is preferably 100 mm or more.

The gauge from the outer end in the tire width direction of the carcass 40 at the position of the outer end in the tire radial direction of the recessed surface 70, specifically, the gauge from the outer end in the tire width direction of the portion where the carcass 40 is folded back to the outer side in the tire width direction at the bead portion 60 (Bead core 61) to the surface of the tire side portion 30 is about 17 mm in this embodiment. The gauge is 8 mm to 25 mm, preferably 13 mm to 20 mm.

The depth D of the groove portion 100 is about 12 mm in this embodiment. The depth D is preferably 5 mm to 15 mm.

As shown in FIG. 4, a plurality of the groove portion 100 are formed at intervals P in the tire circumferential direction. In the present embodiment, the groove portion 100 extends in parallel with the tire radial direction.

The groove width W of the groove portion 100 along the tire circumferential direction is 5 mm or more and 20 mm or less. In this embodiment, the groove width W is set to about 10 mm.

As shown in FIG. 4, in the tire side view, the angle α formed by the straight lines along the adjacent groove portions 100 in the tire circumferential direction (Normal) is 3 to 20 degrees. In this embodiment, the angle α is set to about 4 to 5 degrees.

When the angle α is in such a range, assuming that the distance of the bead portion 60 from the tire center is about 1,000 mm, the interval P corresponding to the angle α = 1 degree is 15 mm.

As will be described later, in order to suppress the change in the falling angle of the carcass 40 located in the bead portion 60 within 1 degree, the ratio of the groove portion 100 in the recessed surface 70 is preferably 0.3 or less. More preferably, the portion where the groove portion 100 is formed and the portion where the groove portion 100 is not formed are repeated at a ratio of 1: 2 in the tire circumferential direction.

### (3)Function and effects

Next, the function and effects of the construction vehicle tire 10 will be described. In the construction vehicle tire 10, a recessed surface 70 recessed toward the inside of the tire is formed in the tire side portion 30 and the bead portion 60. The recessed surface 70 is formed outside in the tire radial direction from an outside end in the tire radial direction of the rim wheel 200.

In the recessed surface 70, the groove portion 100 extending in the tire radial direction is formed, and a plurality of the groove portion 100 are formed at intervals P in the tire circumferential direction.

Since the rubber gauge of the bead portion 60 is reduced by forming the recessed surface 70, the heat generation due to the deformation of the bead portion 60 can be suppressed. Since the plurality of groove portion 100 extending in the tire radial direction are formed in the tire circumferential direction, heat exchange with outside air in the groove portions 100 is accelerated, and the recessed surface 70 can be effectively cooled.

That is, according to the construction vehicle tire 10, while forming the recessed surface 70 recessed toward the inside of the tire on the tire side portion 30 or the bead portion 60, the temperature rise of the bead portion 60 can be more effectively suppressed.

In this embodiment, the groove width W of the groove portion 100 along the tire circumferential direction is 5 mm or more and 20 mm or less. Therefore, the temperature rise of the bead portion 60 can be effectively suppressed while securing the durability of the bead portion 60.

When the groove width W exceeds 20 mm, the rigidity of the bead portion 60 is lowered, and the falling amount of the carcass 40 located in the bead portion 60 is excessively increased. On the other hand, when the groove width W is less than 5 mm, sufficient cooling effect by the groove portion 100 cannot be expected.

In this embodiment, the groove portion 100 extends parallel to the tire radial direction. In the tire side view, an angle α formed by a straight line along the groove portion 100 is 3 to 20 degrees. Therefore, the durability of the bead portion 60 can be secured while effectively cooling the recessed surface 70 by utilizing the groove portion 100.

Similarly to the groove width W, with respect to the angle α, if the angle α is less than 3 degrees, the rigidity of the bead portion 60 is lowered, and the falling amount of the carcass 40 located in the bead portion 60 is excessively increased. On the other hand, when the angle α exceeds 20 degrees, sufficient cooling effect by the groove portion 100 cannot be expected.

In this embodiment, the curvature radius R of the recessed surface 70 is 100 mm or more. Therefore, it is possible to prevent the curvature radius R from being locally reduced while ensuring the depth D of the recessed surface 70 (40 mm). Thus, the temperature rise of the bead portion 60 can be effectively suppressed, and the compression distortion of the bead portion 60 as described later can also be suppressed.

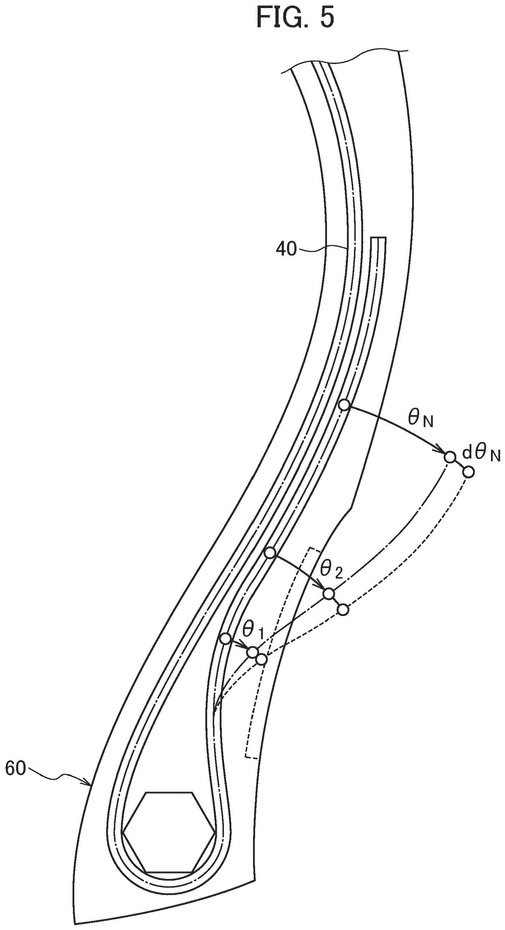

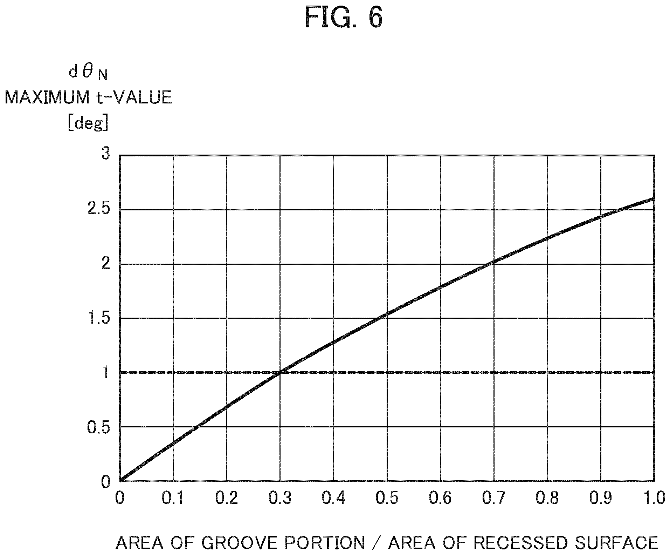

FIGS. 5 and 6 show simulation results regarding the falling angle of the carcass 40 located in the bead portion 60 where the recessed surface 70 is formed. Specifically, FIG. 5 is an explanatory view of the falling angle of the carcass 40. FIG. 6 is a graph showing the relationship between the falling angle of the carcass 40 and the area of the groove portion 100 formed on the recessed surface 70.

As shown in FIG. 5, θ _{N} schematically indicates the falling angle of a carcass 40 located in a bead portion 60 where only a recessed surface 70 is formed by a load (normal load) by the construction vehicle tire 10, that is, where no groove portion 100 is formed.

As shown in FIG. 5, dθ _{N} indicates the falling angle of the carcass 40 which is increased by adding a plurality of groove portions as described above to the recessed surface 70. That is, by forming the groove portion 100 on the recessed surface 70, the falling angle of the carcass 40 increases dθ _{N}.

The vertical axis of FIG. 6 indicates dθ _{N} at the time of the load, and the horizontal axis of FIG. 6 indicates the ratio of the groove portion 100 in the recessed surface 70, specifically, the area of the groove portion 100 / the area of the recessed surface 70.

As shown in FIG. 6, in order to set dθ _{N} to 1 degree or less, the ratio is preferably 0.3 or less. Further, when dθ _{N} exceeds 1 degree, the total value of θ _{N} and dθ _{N} becomes too large, the falling of the carcass 40 becomes large, and the separation of the carcass 40 in the bead portion 60 and the like easily occur.

In general, if the recessed surface 70 and the groove portion 100 are formed, the deformation of the construction vehicle tire 10 at the time of load is increased, the strain on the surface of the carcass 40 or the like is increased, and the durability is lowered. Therefore, it is extremely difficult to achieve both the suppression of the temperature rise of the bead portion 60 and the prevention of the deterioration of durability caused by the strain on the surface of the carcass 40.

In the present embodiment, by analyzing the stress distribution inside the bead portion 60 in detail, a portion that does not contribute much to load support is specified, and the recessed surface 70 and the groove portion 100 are formed in that portion.

As a result, at the size of 59/80 R 63, the recessed surface 70 of about 40 mm can be formed, thereby suppressing the temperature rise of the bead portion 60 and preventing the durability deterioration due to the strain on the surface of the carcass 40.

### (4)Other embodiments

While the contents of the present invention have been described in accordance with the above embodiments, it will be apparent to those skilled in the art that the present invention is not limited to these descriptions and that various modifications and improvements are possible.

For example, in the above-described embodiment, the recessed surface 70 is formed on the tire side portion 30 and the bead portion 60, but it may be formed on at least one of the tire side portion 30 and the bead portion 60.

The recessed surface 70 may be recessed within a range of 22% or more and 28% or less of the height H (See Figure 2) by 35 mm or more and 40 mm or less.

The normal load in the above-described embodiment is the maximum load capacity (maximum load) corresponding to the maximum load capacity in the JATMA YearBook. In addition, ETRTO in Europe, TRA in the United States, and tire standards in other countries correspond.

Although embodiments of the invention have been described as described above, the discussion and drawings which form part of this disclosure should not be construed as limiting the invention. Various alternative embodiments, embodiments and operational techniques will be apparent to those skilled in the art from this disclosure.

### [Reference Signs List]

10 Construction vehicle tire
20 Tread portion
30 Tire side portion
40 Carcass
50 Belt layer
60 Bead portion
61 Bead core
62 Bead filler
70 Recessed surface
100 Groove portion
200 Rim wheel

## Claims

1. A construction vehicle tire comprising:
a tread portion in contact with a road surface;
a tire side portion which is continuous with the tread portion and located inside the tread portion in the tire radial direction;
a bead portion which is connected to the tire side portion and positioned inside the tire side portion in the tire radial direction; wherein
at least one of the tire side portion and the bead portion is formed with a recessed surface recessed toward the inside of the tire,
a recessed surface is formed outside in the tire radial direction from an outside end in the tire radial direction of a rim wheel assembled to the construction vehicle tire,
a groove portion extending in the tire radial direction is formed on the recessed surface, and
a plurality of the groove portion are formed at intervals in the tire circumferential direction.

2. The construction vehicle tire according to claim 1, wherein a groove width of the groove portion along a tire circumferential direction is 5 mm or more and 20 mm or less.

3. The construction vehicle tire according to claim 1 or 2, wherein
the groove extends in parallel with the tire radial direction, and
in a tire side view, an angle formed by straight lines along the groove portions adjacent in a tire circumferential direction is 3 to 20 degrees.

4. The construction vehicle tire according to any one of claims 1 to 3, wherein a curvature radius of the recessed surface in a cross section along a tire width direction and a tire radial direction is 100 mm or more.
